# EUROPÄISCHE PATENTSCHRIFT

(11) **EP 0 723 246 B1**
(45) Veröffentlichungstag und Bekanntmachung des Hinweises auf die Patenterteilung: **23.07.2003**
(21) Anmeldenummer: 95120436.1
(22) Anmeldetag: 22.12.1995
(51) Int. Cl.: G06K 19/16, G06K 19/18, B44F 1/10, B41M 3/14

(54) **Datenträger mit einem optisch variablen Element**
Record carrier having an optically variable element
Support d'information à élément optiquement variable

(30) Priorität: 23.12.1994 DE 4446368
(43) Veröffentlichungstag der Anmeldung: 24.07.1996
(73) Patentinhaber: Giesecke & Devrient GmbH, 81677 München (DE)
(72) Erfinder: Solmsdorf, Bernhard, D-89440 Lutzingen (DE)
(74) Vertreter: Klunker . Schmitt-Nilson . Hirsch

(56) Entgegenhaltungen:
- EP-A- 0 328 086
- EP-A- 0 420 261
- EP-A- 0 477 535

## Beschreibung

Die Erfindung betrifft einen Datenträger mit einem optisch variablen Element, das eine Schicht aufweist, die einfallendes Licht gerichtet reflektiert und Kennzeichnungen in Form von Zeichen, Mustern, Bildern oder Logos aufweist.

Optisch variable Elemente sind seit einigen Jahrzehnten in verschiedenen Ausführungsformen bekannt. Optisch variable Elemente werden in den unterschiedlichsten Gebieten verwendet, z.B. in der Werbebranche, im Dekoracionsbereich, aber auch im Sicherheitsbereich, beispielsweise zur Echtheitskennzeichnung von Datenträgern.

Gemeinsam ist diesen Elementen, daß sie je nach Betrachtungs- und Beleuchtungswinkel unterschiedliche optische Effekte zeigen. Die Elemente werden beispielsweise als separate optisch variable Elemente in Form von Beugungsgittern, Hologrammen oder Kinegrammen auf einen Datenträger aufgebracht. Mit der Verwendung von Hologrammen zur Absicherung von Datenträgern kann zwar bei den heute bekannten Technologien ein optisch ansprechendes und optisch variables Element aufgebracht werden, jedoch fallen bei der Herstellung des Hologramms erhebliche Kosten an, die vor allem bei der Produktion des sogenannten Hologramm-Masters entstehen. Diese Kosten lassen sich, bezogen auf das einzelne Hologramm, nur dadurch reduzieren, daß von dem jeweils hergestellten Hologramm-Master eine entsprechend hohe Anzahl an Transferhologrammen hergestellt wird. Diese Technologie eignet sich somit lediglich für Großserien, bei denen die relativ hohen Kosten zur Herstellung des Masters auf eine hohe Anzahl von Datenträgern verteilt werden kann. Folglich ist diese Technologie im Hinblick auf Änderungswünsche im Design des optisch variablen Elementes nur wenig flexibel.

In der EP 0 477 535 A2 wird der Ansatz verfolgt, optisch variable Elemente, wie Hologramme in neutraler Form bereitzustellen und die Oberfläche eines Datenträgers bereichsweise mit einer rauhen Struktur auszustatten, die sich beim Aufbringen der optisch variablen Elemente in diese einprägt und den spiegelnden Glanz einer Metallschicht zerstört. Die an der Datenträgeroberfläche vorgenommene Strukturveränderung dient der Individualisierung der aufgebrachten Hologramme durch eine zusätzliche Information.

In der Patentanmeldung EP 0 420 261 A1 werden verschiedene Individualisierungsmaßnahmen für Hologramme vorgeschlagen, wobei der Grad der Individualisierung den jeweiligen Sicherheitsaspekten angepasst ist, ohne die Kostenvorteile bei der Serienproduktion von Standardhologrammen wesentlich einzubüßen. Die Individualisierungsmaßnahmen werden alternativ während unterschiedlicher Stadien der Herstellung oder Verarbeitung der Prägehologramme oder der damit ausgestatteten Datenträger ausgeführt. Unter anderem wird auch das Bedrucken von Hologrammen erwähnt.

Darüber hinaus gibt es auch drucktechnische Möglichkeiten, ein optisch variables Element auf einen Datenträger aufzubringen.

Zur Absicherung von Wertpapieren ist es beispielsweise aus der DE 23 34 702 bekannt, ein optisch variables Element auf einem Sicherheitspapier durch einen speziellen Tiefdruck zu erzeugen. Das Druckverfahren wird dabei so ausgeführt, daß auf dem Sicherheitspapier dreidimensionale Linienmuster entstehen, die sich entweder in ihrer Höhe oder ihrer Ausrichtung so unterscheiden, daß bei Betrachtung unter senkrechtem und schrägem Einfallswinkel Bildelemente sichtbar werden bzw. verschwinden. Auf diese Weise lassen sich Informationen auf dem Datenträger aufbringen, die lediglich unter bestimmten Betrachtungswinkeln sichtbar sind.

Eine Besonderheit solcher sogenannter latent images besteht darin, daß die Information ausschließlich unter bestimmten definierten Betrachtungsinkeln sichtbar ist. Zur Prüfung der auf dem Datenträger aufgebrachten Information muß er somit in die jeweils richtige Winkelposition zum Auge gebracht werden, um die Information erkennen zu können. Darüber hinaus haben derartige drucktechnisch hergestellte, optisch variable Elemente den Nachteil, daß sie oft nur schwer erkennbar sind.

Die Aufgabe der Erfindung besteht somit darin, einen Datenträger mit einem optisch variablen Element bzw. ein optisch variables Element zu schaffen, in welches Informationen eingebracht sind, wobei der Datenträger kostengünstig herstellbar ist, die in das optisch variable Element eingebrachten Informationen unter allen Betrachtungswinkeln einfach erkennbar sind und die Informationen einen betrachtungswinkelabhängigen Effekt aufweisen.

Diese Aufgabe wird durch die in den unabhängigen Ansprüchen genannten Merkmale gelöst. Weiterbildungen sind Gegenstand der untergeordneten Ansprüche.

Der Grundgedanke der Erfindung besteht darin, eine gerichtet reflektierende Fläche mit einem diffus streuenden Flächenbereich zu kombinieren, d.h. die reflektierende Fläche in Teilbereichen durch eine diffus streuende zu ersetzen.

Grundsätzlich weist die reflektierte Strahlung bei Beobachtung der reflektierenden Schicht unter verschiedenen Betrachtungswinkeln unterschiedliche Intensitäten auf. Wird nun die reflektierende Fläche in Teilbereichen durch einen diffus streuenden Flächenbereich ersetzt, so wird dem betrachtungswinkelabhängigen Intensitätsverlauf der reflektierten Strahlung eine im wesentlichen bei allen Betrachtungswinkeln konstante Intensität überlagert, die durch die diffus streuenden Flächenbereiche erzeugt wird. Abhängig vom Betrachtungswinkel entsteht somit für den Betrachter der Eindruck, daß bei bestimmten Winkeln der reflektierende Flächenuntergrund heller erscheint als die diffus streuenden Flächenbereiche, während bei anderen Winkeln die diffus streuenden Flächenbereiche heller erscheinen als die reflektierenden Bereiche. Werden nun durch die Kombination der diffus streuenden Flächenbereiche mit den gerichtet reflektierenden Bereichen optisch wahrnehmbare Informationen, wie Bilder, Logos, Zeichen oder ähnliches, erzeugt, so entsteht ein optisch variables Element, das bei unterschiedlichen Betrachtungswinkeln zwar ein unterschiedliches Erscheinungsbild hat, dessen Informationsgehalt jedoch unter allen Betrachtungswinkeln sichtbar ist. Lediglich das optische Erscheinungsbild wechselt von hell nach dunkel bzw. von dunkel nach hell, was im allgemeinen den optischen Eindruck eines Wechseln von "positivem" Bild zu "negativem" Bild führt. Besonders ausgeprägt ist dieses Positiv-Negativ-Wechselbild, wenn die Information als sogenanntes Halbtonbild in einer der bekannten Techniken, wie etwa dem Ditherverfahren aufgebracht sind.

In einer bevorzugten Ausführungsform besteht der erfindungsgemäße Datenträger in einer Ausweiskarte, die zumindest in einem Teilbereich eine diffus streuende Schicht aufweist, die von einer hochreflektierenden Metallschicht abgedeckt ist. Die Metallschicht ist in Teilbereichen unterbrochen, so daß hier die darunterliegende diffus streuende Schicht sichtbar wird. Die Unterbrechungen der Metallschicht haben beispielsweise die Form von Zeichen, Mustern, Bildern, Logos oder ähnlichem. Bei nahezu senkrechter Betrachtung der Oberfläche des Datenträgers, erscheinen die Unterbrechungen der Metallschicht hell vor dem dunkler wirkenden metallischen Untergrund. Wird der Datenträger jedoch gekippt und schräg betrachtet, so fällt unter einem bestimmten Betrachtungswinkel das Intensitätsmaximum der von der Metallschicht gerichtet reflektierten Strahlung in das Auge des Betrachters. Unter diesem Winkel wechselt der optische Eindruck, so daß der metallische Hintergrund die diffus streuenden Flächenbereiche überstrahlt und heller als diese wirkt.

Es entsteht somit unter einem bestimmten Betrachtungswinkelbereich der Eindruck der Kontrastumkehr zwischen Vorder- und Hintergrund, der zu einem Wechsel von positiver und negativer Zeichen- oder Bilddarstellung führt.

Durch den hohen Intensitätsunterschied zwischen der reflektierenden und der diffus streuenden Schicht ergibt sich ein vom Auge ausgezeichnet erkennbarer Kontrast, der auch beim Kippen des Datenträgers deutlich hervortritt, so daß die Information unter allen Betrachtungswinkeln klar erkennbar ist.

Der Datenträger ist darüber hinaus hervorragend gegen Kopieren geschützt, da die zur Erzeugung des Kippeffekts erforderliche reflektierende Schicht mit Hilfe von Kopiergeräten nicht erzeugt werden kann, so daß bei der Kopie der optisch variable Effekt verlorengeht.

Ein weiterer Vorteil ergibt sich, wenn zur Erzeugung der Informationen die unter der gerichtet reflektierenden Schicht liegende diffus streuende Schicht mit Hilfe eines Laserstrahls freigelegt wird. Durch diese Technologie läßt sich die Information in einem letzten Arbeitsgang auch in eine ansonsten bereits fertiggestellte Karte einbringen. Damit besteht die Möglichkeit, einerseits individuelle Daten in Form optisch variabler Informationen in den Datenträger einzubringen und andererseits sehr flexibel auf gewünschte Designänderungen zu reagieren.

Weitere Ausführungen und vorteilhafte Weiterbildungen der Erfindung ergeben sich aus den nachfolgenden Beispielen, die anhand schematischer Figuren erläutert werden, bei deren Darstellung bewußt auf eine maßstabsgetreue Wiedergabe verzichtet wurde, um die Anschaulichkeit zu erhöhen.

Es zeigen:
- Fig. 1: eine erfindungsgemäße Ausweiskarte,
- Fig. 2: die relative Intensität für gerichtet reflektierte und diffus gestreute Strahlung als Funktion des Betrachtungswinkels,
- Fig. 3a: eine erfindungsgemäße Ausweiskarte bei Betrachtung außerhalb des Reflexionswinkels der reflektierenden Schicht,
- Fig. 3b: die erfindungsgemäße Ausweiskarte bei Betrachtung im Reflexionswinkel der reflektieranden Schicht,
- Fig. 4: eine erfindungsgemäße Ausweiskarte in Schnittdarstellung
- Fig. 5: eine weitere Ausführungsform der erfindungsgemäßen Ausweiskarte in Schnittdarstellung,
- Fig. 6: eine weitere Ausführungsform der erfindungsgemäßen Ausweiskarte in Schnittdarstellung,
- Fig 7a: eine Ausschnittsvergrößerung aus der erfindungsgemäßen Ausweiskarte bei Betrachtung außerhalb des Reflexionswinkels der reflektierenden Schicht,
- Fig. 7b: eine Ausschnittsvergrößerung aus der erfindungsgemäßen Ausweiskarte bei Betrachtung im Reflexionswinkel der reflektierenden Schicht.

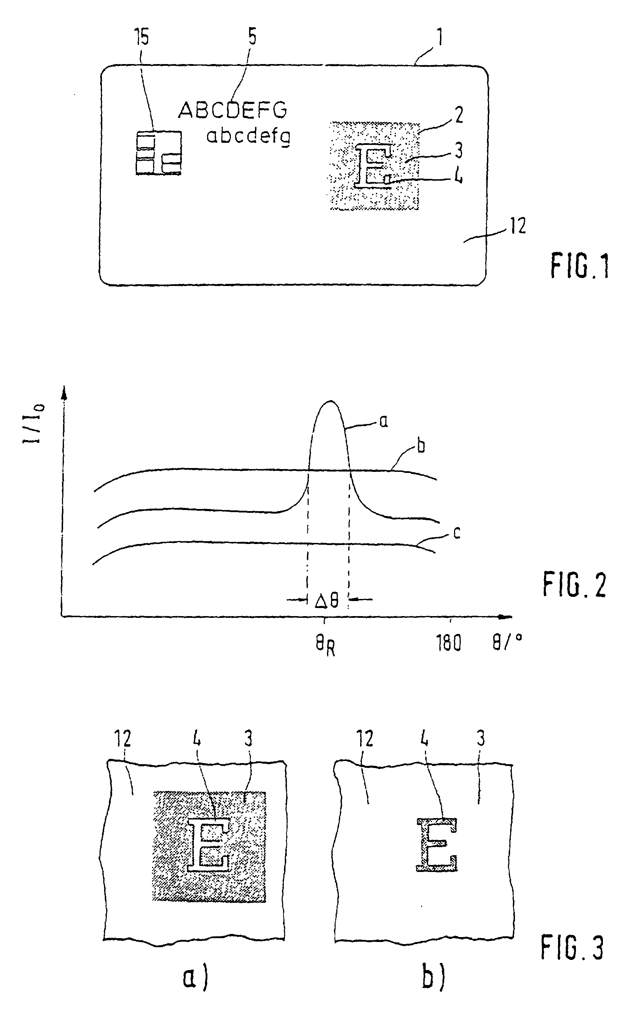

Fig. 1 zeigt schematisch einen erfindungsgemäßen Datenträger in Form einer Ausweiskarte 1, welche mit einem optisch variablen Element 2 versehen ist. Das optisch variable Element 2 ist als Transferelement auf die Oberfläche 12 der Karte aufgebracht und besteht aus einer gerichtet reflektierenden Schicht 3 sowie einer Kennzeichnung 4, die durch lokales Abtragen der gerichtet reflektierenden Schicht 3 in Form des Buchstabens "E" erzeugt wurde. Durch das Abtragen der gerichtet reflektierenden Schicht 3 wird ein darunterliegender diffus streuender Flächenbereich sichtbar. Neben dem optisch variablen Element 2 kann die Karte auf oder in einer ihrer Schichten Druckbilddaten 5, einen integrierten Schaltkreis 15, einen Magnetstreifen oder andere Zusatzelemente enthalten.

Die Kennzeichnungen 4 werden vorzugsweise so aufgebracht, daß sie alphanumerische Zeichen, Logos, Bilder, insbesondere Halbtonbilder wie das Foto des Inhabers, personenbezogene Daten oder ähnliches bilden.

Bei Beleuchtung der Karte unter einem festen Einfallswinkel θ_{E} zur Ebene, in der die Oberfläche der Karte liegt, wird das einfallende Licht von dem gerichtet reflektierenden Teil 3 des optisch variablen Elementes 2 in einen fest vorgegebenen Raumwinkel θ_{R} reflektiert. Im Idealfall ist daher in einem Winkel außerhalb θ_{R} keine Intensität meßbar bzw. sichtbar, die auf der Reflexion durch die Schicht 3 beruht.

Die tatsächlichen Umgebungsverhältnisse bedingen jedoch bei Tageslicht stets, daß auf den Datenträger Licht aus einem Winkel θ_{E} fällt, das sich durch die höchste Intensität auszeichnet, jedoch auch aus anderen Richtungen Streulicht mit geringer Intensität auf den Datenträger auftrifft und somit auch die Reflexion in nahezu alle Winkelbereiche erfolgt, wobei die höchste Intensität in einem bestimmten Raumwinkelelement Δθ liegt.

In Fig. 2 ist der relative Intensitätsverlauf I/I₀ für verschiedene Betrachtungswinkel θ schematisch dargestellt, der sich für eine derartige gerichtet reflektierende Metallschicht bei Beleuchtung unter normalen Umgebungsbedingungen ergibt. Die Kurve a, welche den Intensitätsverlauf für die gerichtet reflektierende Schicht 3 repräsentiert, hat bei dem Winkel θ_{R} ein ausgeprägtes Maximum. In der gleichen Figur wurde entsprechend auch die relative Intensität einer diffus streuenden, gering absorbierenden Schicht (b) und einer diffus streuenden, stark absorbierenden Schicht (c) dargestellt. Durch die Schnittpunkte der Graphen a und b wird ein Raumwinkelelemente Δθ definiert, in dem die Intensität der reflektierten Strahlung die Intensität der diffus gestreuten Strahlung übersteigt.

Wird nun ein optisch variables Element, das aus einer gerichtet reflektierenden Schicht und aus diese Schicht unterbrechenden, diffus streuenden Flächenelementen besteht, unter verschiedenen Betrachtungswinkeln beobachtet, so erscheinen die diffus streuenden Flächenelemente unter den meisten Betrachtungswinkeln hell vor einem dunklen Hintergrund. Im Bereich des Betrachtungswinkelelementes Δθ wird jedoch der Lichtintensitätsanteil der diffus streuenden Flächenelemente 4 vom Lichtintensitätsanteil der gerichtet reflektierenden Fläche 3 deutlich übertroffen, so daß in diesem Betrachtungswinkelbereich eine Kontrastumkehr auftritt.

In Fig. 3a ist ein Ausschnitt aus dem erfindungsgemäßen Datenträger gemäß Fig. 1 dargestellt. Der Betrachtungswinkel liegt dabei außerhalb des Betrachtungswinkelbereiches Δθ, so daß der Buchstabe "E" als helle Aussparung 4 innerhalb einer grauen Metallschicht 3 zu erkennen ist.

Wird nun die Karte so gedreht, daß der Betrachtungswinkel innerhalb des Reflexionsbereiches Δθ der gerichtet reflektierenden Metallschicht fällt, so werden die Intensitätsverhältnisse umgekehrt und die Aussparung "E" erscheint dunkel vor einem hellen Hintergrund. In Fig. 3b ist derselbe Ausschnitt des Datenträgers bei Betrachtung unter dem Reflexionswinkel θ_{R} der reflektierenden Schicht dargestellt. Das Flächenelement 4 erscheint nun dunkel vor dem hellen gerichtet reflektierenden Hintergrund 3. Der Informationsgehalt, der in das optisch variable Element, in diesem Fall in Form eines Buchstabens "E" eingebracht ist, bleibt jedoch unter allen Betrachtungswinkeln erhalten.

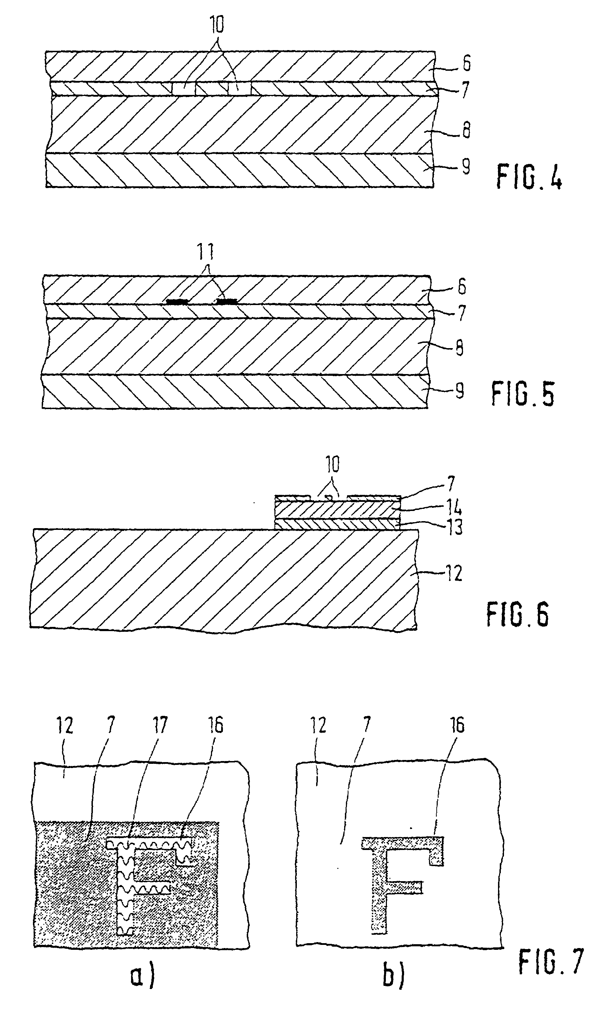

In Fig. 4 ist schematisch ein möglicher Aufbau des erfindungsgemäßen Datenträgers im Querschnitt im Bereich des optisch variablen Elementes zu sehen. Unter einer transparenten Kartendeckschicht 6 ist eine gerichtet reflektierende Metallschicht 7 angeordnet, die wiederum eine diffus streuende Schicht 8 abdeckt, welche gleichzeitig als Kartenkernschicht dient. Die Kartenkernschicht 8 wird von einer zweiten transparenten oder opaken Kartendeckschicht 9 abgedeckt.

Mit Hilfe eines Laserstrahls wird die Schicht 7 lokal vollständig abgetragen, so daß hier durch Schichtunterbrechungen 10 der Blick auf die diffus streuende Schicht 8 ermöglicht wird. Je nach Reflexionsvermögen der Schicht 7 kann für die Schicht 8 eine Farbe gewählt werden, die jedoch lediglich Anteile des einfallenden Lichtes absorbiert. Besonders geeignet sind hierzu wenig absorbierende Farbtöne wie Weiß, Gelb, Hellblau oder die verschiedenen bekannten Pastelltöne. Bei der Auswahl der Eigenschaften der Schicht 8 ist immer darauf zu achten, daß die Intensität der gerichtet reflektierenden Schicht nicht bei allen Betrachtungswinkeln über der der diffus streuenden Schicht 8 liegt (Kurve c in Fig. 2), da sonst die Kontrastumkehr bei keinem Betrachtungswinkel eintritt. Die Absorptionseigenschaften der Schicht 8 sind somit zwar prinzipiell von der Reflektivität der verwendeten Schicht 7 abhängig, jedoch sind im allgemeinen nur schwach absorbierende Farbschichten zu wählen. Die Größe der noch akzeptierbaren Absorption ist von der Reflexionsfähigkeit der darüberliegenden, gerichtet reflektierenden Schicht 7 abhängig.

Für die Schicht 7 kommen alle Materialien in Betracht, die eine sichtbare einfallende Strahlung gerichtet reflektieren, wie etwa Metallschichten, metallisch glänzende Schichten oder mit Metallen beschichtete Schichten. Darüber hinaus können auch solche Materialien verwendet werden, die aufgrund ihres Aufbaus Licht ausschließlich oder bevorzugt in ein bestimmtes Raumwinkelelement streuen. Hierunter fallen z.B. Sägezahnprofile oder Beugungsgitter, die in Schichten eines beliebigen Materials eingebracht oder auf diese aufgebracht sind.

In Fig. 5 ist eine weitere Ausführungsform des erfindungsgemäßen Datenträgers dargestellt. Unter einer transparenten Deckschicht 6 liegt eine gerichtet reflektierende Schicht 7, die mit Aufdrucken 11 in einer diffus streuenden Farbe versehen ist. Unter der Schicht 7 liegt wiederum die Kernschicht 8, die auf der rückwärtigen Seite von einer transparenten oder opaken rückwärtigen Deckschicht 9 abgedeckt wird. Diese Ausführungsform ist besonders dann von Vorteil, wenn die in das optisch variable Element eingebrachten Daten bereits bei der Herstellung des optisch variablen Elementes aufgebracht werden oder diese Daten eine Farbe aufweisen sollen, die verschieden von der Farbe der Kernschicht 8 ist. Darüber hinaus lassen sich auch mehrere verschiedene Aufdrucke 11 auf die Oberfläche der Schicht 7 aufbringen, die sich untereinander auch durch ihre Farbgebung unterscheiden. Zur Erzeugung des Drucks auf der Schicht 7 gelten für die Druckfarben letztendlich die gleichen Auswahlbedingungen wie oben bereits für die Schicht 8 beschrieben worden ist: Die ausgewählten Druckfarben müssen einfallendes Licht diffus streuen, wobei die Intensität des Streulichts zumindest in einem Winkelbereich über der Intensität liegt, die die gerichtet reflektierende Metallschicht in diesem Winkel aufweist.

Der erfindungsgemäße Datenträger läßt sich selbstverscändlich auch dadurch herstellen, daß die gerichtet reflektierende Schicht in Teilbereichen so verändert wird, daß die ursprünglichen Reflexionseigenschaften in diffus streuende Eigenschaften umgewandelt werden. Als besonders vorteilhaft hat sich hierbei herausgestellt, Metallschichten lediglich in bestimmten Bereichen in Form der gewünschten Kennzeichnungen zu mattieren, beispielsweise aufzurauhen, so daß deren Reflexionseigenschaft verlorengeht und dadurch lediglich diffus streuende Bereiche der Metallschicht entstehen, ohne daß diese vollständig abgetragen würde. Dieses Verfahren läßt sich einerseits durch Verwendung mechanischer Stichel oder Kratzer durchführen, die so über die Oberfläche der Metallschicht geführt werden, daß diese aufgerauht wird. Desweiteren kann mit Hilfe eines niedrig dosierten Laserstrahls ebenfalls die Oberfläche in ihrem Glanz beeinträchtigt werden, so daß die bestrahlten Bereiche keine gerichtete Reflexion mehr aufweisen, obwohl die Metallschicht an diesen Stellen nicht entfernt wurde. Bei Schichten, die auf andere Weise eine gerichtete Reflexion erzeugen, wie beispielsweise das oben beschriebene Sägezahnmuster, besteht darüber hinaus die Möglichkeit, die gerichtete Reflexion verursachenden Strukturen abzudecken oder aufzufüllen. Im Fall des Sägezahnmusters kann beispielsweise das Tiefenprofil der Schicht durch Auffüllen mit einer transparenten, transluzenten oder opaken Farbe in Form der Kennzeichnung so verändert werden, daß die gerichtete Reflexion in den farbtragenden Teilbereichen durch eine diffuse Streuung ersetzt wird.

Für einige Datenträger und Herstellungsverfahren kann es von Vorteil sein, wenn das erfindungsgemäße optisch variable Element erst nach Fertigstellung des Datenträgers in einem Transferverfahren auf dessen Oberfläche aufgebracht wird. Dabei kann es sich beispielsweise um Ausweiskarten, Wertpapiere, wie Banknoten, Pässe, Paßpersonalisierungsseiten oder andere Dokumente handeln, bei deren Herstellung wenig Einfluß auf deren Aufbau genommen werden kann. Bei solchen Datenträgern wird das optisch variable Element auf die Oberfläche des Dacenträgers 12 aufgebracht. Wie in Fig. 6 dargestellt, besteht das optisch variable Element hierbei vorzugsweise aus einer Klebeschicht 13, einer diffus streuenden Schicht 14 sowie einer gerichtet reflektierenden Schicht 7. Mit Hilfe gängiger Transferverfahren, wie etwa dem Hot-Stamping-Verfahren, ist es möglich, derartige optisch variable Elemente auf der Oberfläche des Datenträgers 12 gezielt zu positionieren und zu fixieren, wobei die Oberfläche des Datenträgers 12 in dem Bereich, in dem das optisch variable Element aufgebracht wird, bevorzugt glatt ausgeführt ist. In den Fällen, in denen die Kleberschicht bereits die Anforderungen erfüllt, die an eine diffus streuende Schicht gestellt werden, kann auch auf die Schicht 14 verzichtet werden.

Sofern die diffus streuenden Bereiche dadurch sichtbar gemacht werden, daß die Oberfläche der gerichtet reflektierenden Schicht lokal abgetragen wird, kommen verschiedene Arbeitsverfahren in Betracht. Hierunter zählen vor allem das lokale Abtragen der Schicht mit Hilfe eines Lasers, das Abtragen der gerichtet reflektierenden Metallschicht mit Hilfe mechanischer Gravierverfahren oder ähnliches. Das Abtragen mit Hilfe eines Lasers hat den Vorteil, daß die Metallschicht auch im Innern eines Schichtverbundes abgetragen werden kann und somit nach Fertigstellung des gesamten Datenträgers das optisch variable Element individuell gestaltet oder personalisiert werden kann. Konkret bieten sich hierzu die Möglichkeiten, die personenbezogenen Daten einer Ausweiskarte, das Foto des Karteninhabers, dessen Fingerabdruck oder ähnliches in das optisch variable Element aufzunehmen. Darüber hinaus besteht bei einer derartigen Vorgehensweise auch die Möglichkeit, bei Vorliegen einer großen Anzahl vorgefertigter Datenträger einzelne Serien herzustellen, wobei die Serien als gemeinsames Merkmal ein identisches optisch variables Element aufweisen, das jeweils einfach und schnell mit Hilfe eines Lasers mit den für die Serie individuellen Merkmalen versehen werden kann.

Die Größe oder Form des aufzubringenden optisch variablen Elementes unterliegt in technischer Hinsicht keinerlei Beschränkungen. So können beispielsweise gerichtet reflektierende Schichten in das Innere eines Kartenaufbaus über die gesamte Fläche oder nur in Teilbereichen eingebracht werden. Auch die in einem Transferverfahren auf die Oberfläche eines Datenträgers aufgebrachten optisch variablen Elemente können in beliebiger Form aufgebracht werden, so daß sie beispielsweise schon durch ihren Umriß und die zusätzlich eingebrachten, diffus streuenden Flächenelemente wirken. Beispielsweise können die opcisch variablen Elemente in Kreis-, Sternoder Rechteckform oder in einer beliebigen anderen geometrischen Form in den Datenträger eingebracht oder auf dessen Oberfläche aufgebracht sein. Darüber hinaus können in den Datenträger auch solche optisch variablen Elemente eingebracht werden, die von einer Kante des Datenträgers zu einer gegenüberliegenden reichen oder zwei aneinandergrenzende Kanten miteinander verbinden.

Wie in einer Ausschnittsvergrößerung des erfindungsgemäßen Datenträgers in Fig. 7a gezeigt, weist der Datenträger in einer weiteren Ausführungsform einen diffus streuenden Flächenbereich 16 auf, in den zusätzliche Informationen 17 in Form von Mustern oder Zeichen eingebracht sind. Hinsichtlich ihres Kontrastes unterscheiden sich die Informationen vom diffus streuenden Flächenbereich 16 nur wenig, so daß beim Betrachten des Datenträgers unter dem Reflektionswinkel θ_{R} sowohl der diffus streuenden Flächenbereich 16 wie auch die Informationen 17 von der gerichtet reflektierenden Schicht 3 überstrahlt werden, so daß, wie in Fig. 7b gezeigt, das optisch variable Element bei Betrachtung unter dem Reflektionswinkel θ_{R} den diffus streuenden Flächenbereich 4 dunkel vor einem hellen Hintergrund 7 erscheinen lassen, wobei die Informationen 17 bei Betrachtung unter diesem Winkel vollständig verschwinden. Die Informationen 17 können zur Erzielung dieses Effektes in den Flächenbereich 16 beispielsweise dadurch eingebracht werden, daß sie in einer zum Flächenbereich 16 selbst nur wenig kontrastierenden und diffus streuenden Farbe aufgedruckt werden. Besonders geeignet ist hierzu der Aufdruck einer hellen, beispielsweise gelben, hellblauen oder pastellfarbenen, Farbe auf einem hellen, beispielsweise weißen, Untergrund. Die Kennzeichnungen 17 können aber auch durch lokale Vertiefungen, wie beispielsweise Einritzen oder farbloses Einlasern in den Flächenbereich 16 eingebracht werden, ohne daß irgendeine zusätzliche Farbe zur Anwendung kommt.

Der erfindungsgemäße Datenträger läßt sich im Rahmen der vorgenannten Beispiele durch einen weiteren optisch variablen Effekt ergänzen. Hierzu wird auf einen Datenträger ein Hologramm aufgebracht, welches in einer seiner oberen Schichten eine gerichtet reflektierende Fläche aufweist, deren Reflexionsrichtung durch die darunterliegende Flankenstarrheit der holografischen Prägung bestimmt ist. Da unter der gerichtet reflektierenden Schicht des Hologramms eine weitere Schicht liegt, die die Eigenschaft hat, eine einfallende Strahlung diffus zu streuen, läßt sich durch Abtragen der Metallschicht, beispielsweise mit Hilfe eines Lasers, der in den vorangegangenen Beispielen beschriebene Effekt mit den optisch variablen Effekten des Hologrammes kombinieren. Auf diese Weise lassen sich die oben bereits beschriebenen optisch variablen Kennzeichnungen in den Datenträger einbringen, wobei die Intensität des Laserstrahles so gesteuert werden kann, daß die optisch variablen Eigenschaften des Hologrammes im wesentlichen erhalten bleiben und der holografischen Gesamtinformation ein Bild überlagert werden kann, welches bei bestimmten 3etrachtungswinkeln positiv und bei anderen Betrachtungswinkeln negativ erscheint.

## Patentansprüche

1. Datenträger mit einem darauf angeordneten oder darin integrierten optisch variablen Element (2), das eine Fläche aufweist, die einfallendes Licht gerichtet zu einem Betrachter reflektiert und die gerichtet reflektierende Fläche (3,7) des optisch variablen Elementes (2) mit einem diffus streuenden Flächenelement (4) so kombiniert ist, daß optisch erkennbare Kennzeichnungen entstehen und die Reflexionsfähigkeit der gerichtet reflektierenden Fläche (3,7) und die Absorption des diffus streuenden Flächenelements (4) so aufeinander abgestimmt sind, daß die Intensität des gerichtet reflektierten Lichtes zumindest in einem Betrachtungswinkelbereich höher und zumindest in einem benachbarten Betrachtungswinkelbereich niedriger ist als die Intensität des Lichtes, das von den diffus streuenden Flächenbereichen abgestrahlt wird, wobei die gerichtet reflektierende Schicht (3, 7) Unterbrechungen (10) aufweist und das diffus streuende Flächenelement (8,14) unter der gerichtet reflektierenden Schicht (3, 7) liegt und durch die Unterbrechungen (10) sichtbar ist.

2. Datenträger nach Anspruch 1, **dadurch gekennzeichnet, daß** die gerichtet reflektierende Schicht (3, 7) eine Metallschicht, eine metallisch glänzende Schicht oder eine mit Metall beschichtete Schicht ist.

3. Datenträger nach Anspruch 1, **dadurch gekennzeichnet, daß** die gerichtet reflektierende Schicht (3, 7) ein Sägezahnprofil oder ein Beugungsgitter aufweist.

4. Datenträger nach Anspruch 1, **dadurch gekennzeichnet, daß** die Unterbrechungen (10) mit Hilfe eines Lasers eingebracht sind.

5. Datenträger nach Anspruch 1, **dadurch gekennzeichnet, daß** das diffus streuenden Flächenelement in einer wenig absorbierenden Farbe eingefärbt ist.

6. Datenträger nach Anspruch 1 bis 5, **dadurch gekennzeichnet, daß** das diffus streuende Flächenelement weiß, gelb, hellblau oder pastellfarben ist.

7. Datenträger nach Anspruch 1, **dadurch gekennzeichnet, daß** das diffus streuende Flächenelement zumindest im Bereich der Unterbrechungen (10) zusätzliche Informationen (17) aufweist.

8. Datenträger nach Anspruch 7, **dadurch gekennzeichnet, daß** die zusätzlichen Informationen (17) in Form von Mustern oder Zeichen vorliegen.

9. Datenträger nach einem der Ansprüche 1 bis 8, **dadurch gekennzeichnet, daß** das optisch variable Element im Transferverfahren auf den Datenträger aufgebracht wurde.

10. Datenträger nach Anspruch 9, **dadurch gekennzeichnet, daß** die Klebeschicht (13) des transferierten, optisch variablen Elementes als diffus streuende, im optischen Wellenlängenbereich schwach absorbierende Schicht ausgeführt ist.

11. Datenträger mit einem darauf angeordneten oder darin integrierten optisch variablen Element (2), das eine Fläche aufweist, die einfallendes Licht gerichtet zu einem Betrachter reflektiert und die gerichtet reflektierende Fläche (7) des optisch variablen Elementes (2) mit einem diffus streuenden Flächenelement so kombiniert ist, daß optisch erkennbare Kennzeichnungen entstehen und die Reflexionsfähigkeit der gerichtet reflektierenden Fläche (7) und die Absorption des diffus streuenden Flächenelements so aufeinander abgestimmt sind, daß die Intensität des gerichtet reflektierten Lichtes zumindest in einem Betrachtungswinkelbereich höher und zumindest in einem benachbarten Betrachtungswinkelbereich niedriger ist als die Intensität des Lichtes, das von den diffus streuenden Flächenbereichen abgestrahlt wird, wobei das diffus streuende Flächenelement ein Aufdruck (11) auf der gerichtet reflektierenden Schicht (7) ist.

12. Datenträger nach Anspruch 11, **dadurch gekennzeichnet, daß** der Aufdruck (11) in einer im optischen Wellenlängenbereich schwach absorbierenden Farbe durchgeführt ist.

13. Datenträger nach Anspruch 11, **dadurch gekennzeichnet, daß** der Aufdruck (11) in einer hellen, bevorzugt gelben, hellblauen oder Pastell-Farbe durchgeführt ist.

14. Datenträger nach Anspruch 11, **dadurch gekennzeichnet, daß** die gerichtet reflektierende Fläche ein Sägezahnmuster aufweist und der das diffus streuende Flächenelement bildende Aufdruck durch Auffüllen des Sägezahnmusters mit einer Farbe erzeugt wurde.

15. Datenträger nach einem der Ansprüche 11 bis 14, **dadurch gekennzeichnet, daß** das optisch variable Element im Transferverfahren auf den Datenträger aufgebracht wurde.

16. Datenträger nach einem der vorangegangenen Ansprüche, **dadurch gekennzeichnet, daß** die optisch erkennbaren Kennzeichnungen ein Halbtonbild bilden.

17. Optisch variables Element (2), das in einem Transferverfahren auf die Oberfläche eines Datenträgers übertragbar ist und das eine Fläche (3,7) aufweist, die einfallendes Licht gerichtet zu einem Betrachter reflektiert und die gerichtet reflektierende Fläche (3, 7) des optisch variablen Elementes (2) mit einem diffus streuenden Flächenelement (4, 14) so kombiniert ist, daß optisch erkennbare Kennzeichnungen entstehen und die Reflexionsfähigkeit der gerichtet reflektierenden Fläche (3,7) und die Absorption des diffus streuenden Flächenelements (4,14) so aufeinander abgestimmt sind, daß die Intensität des gerichtet reflektierten Lichtes zumindest in einem Betrachtungswinkelbereich höher und zumindest in einem benachbarten Betrachtungswinkelbereich niedriger ist als die Intensität des Lichtes, das von den diffus streuenden Flächenbereichen abgestrahlt wird, wobei das diffus streuende Flächenelement ein Aufdruck (11) auf der gerichtet reflektierenden Schicht (7) ist oder daß die gerichtet reflektierende Schicht (3,7) Unterbrechungen (10) aufweist, durch die hindurch das darunterliegende, diffus streuende Flächenelement (14) sichtbar ist.

## Claims

1. A data carrier with an optically variable element (2) disposed thereon or integrated therein having a surface regularly reflecting incident light to a viewer and the regularly reflecting surface (3, 7) of the optically variable element (2) is combined with a diffusely scattering surface element (4) in such a way that optically recognizable markings arise and the reflectivity of the regularly reflecting surface (3, 7) and the absorption of the diffusely scattering surface element (4) are coordinated in such a way that the intensity of regularly reflected light is higher at least in one viewing angle range and lower at least in one adjacent viewing angle range than the intensity of light radiated by the diffusely scattering surface areas, the regularly reflecting layer (3, 7) having interruptions (10), and the diffusely scattering surface element (8, 14) being located under the regularly reflecting layer (3, 7) and visible through the interruptions (10).

2. A data carrier according to claim 1, **characterized in that** the regularly reflecting layer (3, 7) is a metal layer, a metallically lustrous layer or a metal-coated layer.

3. A data carrier according to claim 1, **characterized in that** the regularly reflecting layer (3, 7) has a sawtooth profile or diffraction grid.

4. A data carrier according to claim 1, **characterized in that** the interruptions (10) are incorporated using a laser.

5. A data carrier according to claim 1, **characterized in that** the diffusely scattering surface element is colored in a poorly absorbing color.

6. A data carrier according to claims 1 to 5, **characterized in that** the diffusely scattering surface element is white, yellow, light blue or pastel.

7. A data carrier according to claim 1, **characterized in that** the diffusely scattering surface element has additional information (17) at least in the area of the interruptions (10).

8. A data carrier according to claim 7, **characterized in that** the additional information (17) exists in the form of patterns or characters.

9. A data carrier according to any of claims 1 to 8, **characterized in that** the optically variable element was applied to the data carrier by the transfer method.

10. A data carrier according to claim 9, **characterized in that** the adhesive layer (13) of the transferred optically variable element is executed as a diffusely scattering layer poorly absorbing in the optical wave range.

11. A data carrier with an optically variable element (2) disposed thereon or integrated therein having a surface regularly reflecting incident light to a viewer and the regularly reflecting surface (7) of the optically variable element (2) is combined with a diffusely scattering surface element in such a way that optically recognizable markings arise and the reflectivity of the regularly reflecting surface (7) and the absorption of the diffusely scattering surface element are coordinated in such a way that the intensity of regularly reflected light is higher at least in one viewing angle range and lower at least in one adjacent viewing angle range than the intensity of light radiated by the diffusely scattering surface areas, the diffusely scattering surface element being a print (11) on the regularly reflecting layer (7).

12. A data carrier according to claim 11, **characterized in that** the print (11) is done in a color poorly absorbing in the optical wave range.

13. A data carrier according to claim 11, **characterized in that** the print (11) is done in a light color, preferably yellow, light blue or pastel.

14. A data carrier according to claim 11, **characterized in that** the regularly reflecting surface has a sawtooth pattern, and the print forming the diffusely scattering surface element was produced by filling the sawtooth pattern with a color.

15. A data carrier according to any of claims 11 to 14, **characterized in that** the optically variable element was applied to the data carrier by the transfer method.

16. A data carrier according to any of the above claims, **characterized in that** the optically recognizable markings form a halftone image.

17. An optically variable element (2) adapted to be transferred to the surface of a data carrier by the transfer method and having a surface (3, 7) regularly reflecting incident light to a viewer and the regularly reflecting surface (3, 7) of the optically variable element (2) is combined with a diffusely scattering surface element (4, 14) in such a way that optically recognizable markings arise and the reflectivity of the regularly reflecting surface (3, 7) and the absorption of the diffusely scattering surface element (4, 14) are coordinated in such a way that the intensity of regularly reflected light is higher at least in one viewing angle range and lower at least in one adjacent viewing angle range than the intensity of light radiated by the diffusely scattering surface areas, the diffusely scattering surface element being a print (11) on the regularly reflecting layer (7) or the regularly reflecting layer (3, 7) has interruptions (10) through which the diffusely scattering surface element (14) located thereunder is visible.

## Revendications

1. Support de données comprenant un élément optiquement variable disposé sur ou intégré dans ce dernier (2), qui présente une surface qui réfléchit une lumière incidente dirigée vers un observateur et la surface réfléchissante directionnelle (3, 7) de l'élément optiquement variable (2) est combinée à un élément de surface à dispersion diffuse (4) de telle sorte que des marquages optiquement identifiables apparaissent et la capacité de réflexion de la surface réfléchissante directionnelle (3, 7) ainsi que l'absorption de l'élément de surface à dispersion diffuse (4) sont adaptées l'une à l'autre de telle sorte que l'intensité de la lumière réfléchie directionnellement soit, au moins dans un champ angulaire d'observation supérieure et au moins dans un champ angulaire d'observation inférieur à l'intensité de la lumière qui est émise par les zones superficielles à dispersion diffuse, la couche à réflexion directionnelle (3,7) présentant des ouvertures (10) et l'élément de surface à dispersion diffuse (8, 14) se trouvant sous la couche à réflexion directionnelle (3, 7) et étant visible à travers les ouvertures (10).

2. Support de données selon la revendication 1, **caractérisé en ce que** la couche à réflexion directionnelle (3, 7) est une couche métallique, une couche brillante métallisée ou une couche revêtue de métal.

3. Support de données selon la revendication 1, **caractérisé en ce que** la couche à réflexion directionnelle (3, 7) présente un profil en dents de scie ou un réseau de diffraction.

4. Support de données selon la revendication 1, **caractérisé en ce que** les ouvertures (10) sont créées à l'aide d'un laser.

5. Support de données selon la revendication 1, **caractérisé en ce que** l'élément de surface à dispersion diffuse est coloré d'une couleur peu absorbante.

6. Support de données selon les revendications 1 à 5, **caractérisé en ce que** l'élément de surface à dispersion diffuse est de couleur blanche, jaune, bleu clair ou pastel.

7. Support de données selon la revendication 1, **caractérisé en ce que** l'élément de surface à dispersion diffuse présente des informations supplémentaires (17) au moins dans la zone des ouvertures (10).

8. Support de données selon la revendication 7, **caractérisé en ce que** les informations supplémentaires (17) se présentent sous forme de dessins ou de signes.

9. Support de données selon l'une des revendications 1 à 8, **caractérisé en ce que** l'élément optiquement variable est appliqué sur le support de données au cours d'un procédé de transfert.

10. Support de données selon la revendication 9, **caractérisé en ce que** la couche de collage (13) de l'élément optiquement variable transféré est réalisée sous forme de couche faiblement absorbante dans la zone de longueurs d'onde optique et à dispersion diffuse.

11. Support de données comprenant un élément optiquement variable disposé sur ou intégré dans ce dernier (2), qui présente une surface qui réfléchit une lumière incidente dirigée vers un observateur et la surface réfléchissante directionnelle (7) de l'élément optiquement variable (2) est combinée à un élément de surface à dispersion diffuse de telle sorte que des marquages optiquement identifiables apparaissent et la capacité de réflexion de la surface réfléchissante directionnelle (7) ainsi que l'absorption de l'élément de surface à dispersion diffuse sont adaptées l'une à l'autre de telle sorte que l'intensité de la lumière réfléchissante directionnelle soit, au moins dans un champ angulaire d'observation supérieure, et au moins dans un champ angulaire d'observation adjacent inférieure à l'intensité de la lumière qui est émise par les zones superficielles à dispersion diffuse, et quoi l'élément de surface à dispersion diffuse est une impression (11) sur la couche à réflexion directionnelle (7).

12. Support de données selon la revendication 11, **caractérisé en ce que** l'impression (11) est réalisée dans une couleur faiblement absorbante dans la zone de longueurs d'onde optique.

13. Support de données selon la revendication 11, **caractérisé en ce que** l'impression (11) est réalisée dans une couleur claire, de préférence jaune, bleu clair ou pastel.

14. Support de données selon la revendication 11, **caractérisé en ce que** la surface réfléchissante directionnelle présente un dessin en dents de scie et **en ce que** l'impression créant l'élément de surface à dispersion diffuse a été produite en remplissant d'une couleur le dessin en dents de scie.

15. Support de données selon l'une des revendications 11 à 14, **caractérisé en ce que** l'élément optiquement variable a été appliqué sur le support de données au cours d'un procédé de transfert.

16. Support de données selon l'une des revendications précédentes, **caractérisé en ce que** les marquages optiquement identifiables forment une image en demi-teinte.

17. Elément optiquement variable (2), qui peut être transféré sur la surface d'un support de données au cours d'un procédé de transfert et qui présente une surface (3, 7) qui réfléchit une lumière incidente dirigée vers un observateur et la surface réfléchissante directionnelle (3, 7) de l'élément optiquement variable (2) est combinée à un élément de surface (4, 14) à dispersion diffuse de telle sorte que des marquages optiquement identifiables apparaissent et la capacité de réflexion de la surface réfléchissante directionnelle (3, 7) ainsi que l'absorption de l'élément de surface à dispersion diffuse (4, 14) sont adaptées l'une à l'autre de telle sorte que l'intensité de la lumière réfléchissante directionnelle est, au moins dans un champ angulaire d'observation supérieure et au moins dans un champ angulaire d'observation adjacent inférieure à l'intensité de la lumière qui est émise par les zones superficielles à dispersion diffuse, l'élément de surface à dispersion diffuse étant une impression (11) sur la couche à réflexion directionnelle (3, 7) ou la couche à réflexion directionnelle présente des ouvertures (10), à travers lesquelles l'élément de surface (14) sous-jacent à dispersion diffuse est visible.
